# EUROPEAN PATENT SPECIFICATION

(11) **EP 4 350 335 B1**
(45) Date of publication and mention of the grant of the patent: **15.04.2026**
(21) Application number: 21749867.4
(22) Date of filing: 24.05.2021
(51) Int. Cl.: G01N 21/952, B64D 39/04, B64D 47/08, B64F 5/60

(54) **SYSTEM FOR POSITIONING IMAGE SENSORS AND ELECTROMAGNETIC RADIATION EMITTERS FOR INSPECTION OF REFUELING HOSES WITH TRANSVERSE, PITCH AND LONGITUDINAL MOVEMENTS AND INSPECTION PROCEDURE**
SYSTEM ZUR POSITIONIERUNG VON BILDSENSOREN UND ELEKTROMAGNETISCHEN STRAHLUNGSEMITTERN ZUR INSPEKTION VON BETANKUNGSSCHLÄUCHEN MIT QUER-, NEIGUNGS- UND LÄNGSBEWEGUNGEN UND INSPEKTIONSVERFAHREN
SYSTÈME DE POSITIONNEMENT DE CAPTEURS D'IMAGES ET D'ÉMETTEURS DE RAYONNEMENT ÉLECTROMAGNÉTIQUE POUR L'INSPECTION DE TUYAUX DE RAVITAILLEMENT AYANT DES MOUVEMENTS TRANSVERSAUX DE TANGAGE ET LONGITUDINAUX ET PROCÉDÉ D'INSPECTION

(43) Date of publication of application: 10.04.2024
(73) Proprietor: Quandum Aerospace S.L., 29590 Campanillas (ES)
(72) Inventor: RODRIGUEZ ROSAS, Rafael, 29190 Málaga (ES)
(74) Representative: López Camba, Emilia
(86) International application number: PCT/ES2021/070371
(87) International publication number: WO 2022/248742

(56) References cited:
- EP-A1- 3 715 815
- CN-A- 110 231 350
- GB-A- 2 586 641

## Description

### OBJECT OF THE INVENTION

The main object of this invention is to improve and optimize the result of another similar and previous one in which some modifications have been introduced that make this new one exceed and significantly improve the results of that other one. The changes are influential enough in the results that they generate notable differences.

The world of in-flight refueling is based on the supply of fuel from an aircraft called a *tanker to* another called a ***receiver.*** The tanker can be equipped with different systems for this supply. Among them, one of the oldest, consists of a ***hose*** that is wound onto *a **drum,*** all contained in a receptacle called ***pod,*** which is usually placed under the wing of the tanker.

After the receiving aircraft is connected to a **drogue** at the end of the hose, the tanker supplies it with the fuel. Its objective, among others, is to alleviate the problems arising from the low autonomy of some receivers that require an additional supply of fuel to be able to complete their air missions.

The supply hose used should be inspected periodically to prevent its use when it has deteriorated beyond acceptable damage tolerances. This operation, which is currently performed on land, can be carried out more easily, if it is done in the air just before or after a refueling operation. The device presented here allows both modalities with great efficiency.

The acquisition of images of almost every elongated element, is based on the use of an obvious and elementary system consisting of a **ring** or quasi-toroidal volume surrounding the elongated system, with a set of image sensors and light emitters that allows to obtain images of the different sections when said elongated element passes through the interior of the ring.

The hose is an elongated element and, therefore, suitable for the application of the above concept.

That set of obvious and basic elements, while indispensable, and thus required to be present in any system for inspection of elongated elements, is not the object of this patent, although it is necessary for its operation. The hose that is used for refueling in tankers has some peculiarities that are the reason for the problems and difficulties involved in obtaining images that provide information about its state of integrity or deterioration. Their resolution and the elements necessary for it, are the true objectives of this invention.

One of the problems that arise when it comes to being able to inspect the hose in practice, is the fact that, along the entire length of it, the width **of its diameter is not constant** due to the existence of elements of greater cross section that enclose its axis and that are required for different functionalities of the system. This simple factor means that in the rings of the inspection system to be used this situation has to be considered and failure to do so would lead to disastrous effects.

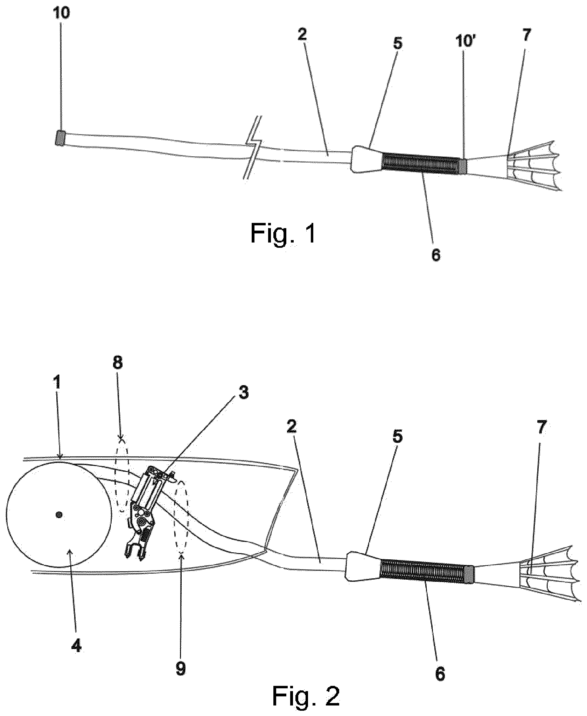

The main elements that, by their size and placement, significantly vary the thickness of what must pass through the ring are the five following (see Figure 1 in which some of these elements arranged on the hose are illustrated (2) for a better understanding):
1. The braking sleeve (5).
2. The buffer spring (6).
3. The connection couplings at the ends (10 and 10').
4. The twisting of the hose due to rotations of the basket through aerodynamic effects.
5. The defects and damage of the hose which generate protrusions in the hose.

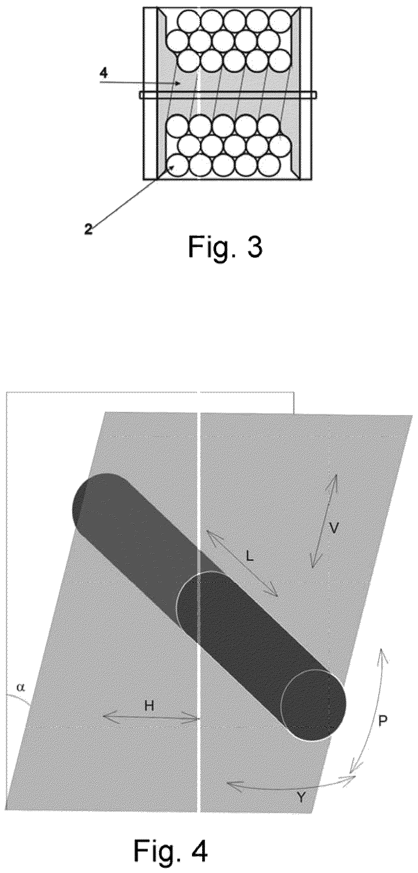

The first three elements are the most significant and are mounted on the hose with a layout similar to that shown on Figure 2, depicting a Pod (1) that houses the hose (2) with those elements and where a servicing carriage (3) is a guide that moves the hose horizontally from one side to the other in a mechanical synchronization with the turns of a drum (4) and serving above all, to help winding the hose onto the drum (4), since it has a helicoid-shaped track on which the hose is placed (see Figure 3).

This servicing carriage is crucial in the operation of this invention since its function is, on one hand, to guide the hose horizontally so that it is properly wound onto the drum and on the other hand being responsible for not letting pass (block) the braking sleeve, making the buffer spring to clamp down the basket when in enters the pod when the hose is collected after a previous extension for an operation with it.

The elements listed above, braking sleeve, buffer spring and connection couplings, have a cross section bigger than the nominal hose (2). Therefore, one of the **objectives** (stated below and referenced with lowercase letters) of this invention is to allow **the passage of the elements of greater cross section through the ring (a),** while at the same time it must adjust itself as close as possible to **the contour of the hose (b),** to obtain the best possible images. We must, in addition, **follow the hose (c)** when it moves in its envelope necessary to wind onto the drum and also avoid as much as possible friction between **the hose and the inside of the ring (d)** that would produce erosion and reduce the life of both.

An important aspect that we must highlight here is that, depending on the position in which we place our system with respect to the servicing carriage, there will be elements that should be able to pass through the inside of the ring or not. In this patent we are going to focus on several positions where the only difference in terms of its implementation will be that the aperture of the ring is different for each of them and that the centering elements will also be different in them. But, in choosing an optimal position for the ring new drawbacks appear that need to be solved and that give rise to new changes in this invention that have been solved effectively.

Among those drawbacks is the fact that the space in which to place the system is reduced and with this, everything else. The sensors and their optics, the light emitters and, in short, the ring itself with everything that it entails must be adapted to this reduced space. As a consequence of the above, there is also a serious problem that must be solved and which is also object of this invention. It consists of the fact that due to the reduction of the ring and the elements it contains, it happens that the distance between the hose and the sensors is also reduced. This, in principle, might seem an advantage and even a goal, since the amount of light needed, when getting closer, would be less and likewise the energy that would have to be supplied for its supply, however, on the contrary it constitutes a serious problem. The reason is that, for the same speed of the hose, and using the same sensor, the closer the image sensors are to it, the faster the speed, in pixels per unit time, at which the image sensor must capture them. This gives rise to the following set of problems that must also be solved in this invention:
1. To avoid blurry images, the acquisition time of the image sensor needs be reduced proportionally (so that the objects appear to be still during that acquisition time), which will imply emission times not able to be met by technologies such as current normal LEDs or incandescent lamps. This implies the use of **high-speed electromagnetic radiation emitters (e)** with very low emission time (<50us).
2. With the same field of view, relatively reduced to avoid geometric distortions, being closer, the part of the hose that can be acquired with the sensor is smaller and we must increase the number of **images acquired per unit of time (f)** and the required **memory (g)** for storing these images. It will also be **necessary to use a certain type of sensors that allow the acquisition of images at the required speed (h)** and that allow adequately low exposure times. They can be line or matrix sensors, but with enough speed to achieve the above.
3. In addition, when illuminating any area of the hose, the light that it reflects towards the sensor must be within the range that the sensor can accept. In other words, the sensor pixels must receive a number of photons that is within the range accepted by the sensor without producing saturation. This condition involves not only considering the shape of the hose and the distances of the emitters of electromagnetic radiation (light) to each part of it, but also the emission angles of the emitters used and of course the degree of reflection of each point of the hose. It has different roughness and textures and different colors and all that contributes to break the homogeneity of reflection. As a consequence of the above, achieving this condition is not at all simple. In addition, having reduced the distance between emitters of electromagnetic radiation and the area to illuminate the influence of factors such as the curvature of the hose itself will have a much greater effect. When the distance from which it is illuminated is large these variations are not worth considering, but in our case the relative position of the emitters of electromagnetic radiation with respect to the hose and the shape of it itself, will have a proportionally more influence since we are talking about distances of centimeters. This lack of homogeneity will have to be adequately **compensated for(i)** to provide the required lighting. In short, optimal lighting must be obtained that avoids dark areas or areas that are too bright.
You also have to ensure that all the images have the same **scale** (j) throughout the length of the hose. To achieve the latter, we must trace of the hose by the ring with image sensors and electromagnetic radiation emitters. That should be in all the axes and directions shown in Figure 4. Within the plane perpendicular to the hose, in the **vertical** (V) and **horizontal** (H) directions. In addition, in the **pitch** movement (P) and **yaw** (Y). All according to figure 4. Also, the ring should, in principle, have an initial **inclination** a so that the direction of the axis perpendicular to the surface containing the ring coincides with that of the longitudinal axis of the hose as also expressed in figure 4. Some of these features may become unnecessary if we appropriately choose the **position** in which we will place the system, thus providing a simplification improving the system.

This invention solves all the previous objectives that are the object of the same, and solves them while at the same time improving the resolution and detail of the hose in the acquired images. In addition, it incorporates substantial improvements (compared to previous inventions) and simplifications in the implementation of the system.

It is the entirety of these problems that, when solved, render the system as proposed here incorporating the improvements that solved these problems and constitute the differences between this invention and previously submitted ones.

The special mechanical and electronic elements of which it is composed characterize the invention, allowing a very effective centering of the hose within the inspection ring despite the differences of thicknesses of its sections and placing the imaging and lighting devices in relative positions as constant as possible with respect to the hose to be inspected, to obtain an optimized and at the same time an efficient system.

Therefore, the present invention is limited within the scope of the means and procedures for the inspection of a refueling hose in what is referred to as "hose and drogue refueling", in order to determine whether a hose has damages that preclude further use in subsequent refueling operations.

### DEFINITIONS

For a better understanding of the terms used in this document, we define here some terms of interest used throughout it:
**Data bus:** set of metallic, optical or any other connections that allows the transfer of information between one part of the system and another or between the system and another at the outside.
**Electromagnetic emission:** combination of variable electric and magnetic fields that are emitted by a source and that propagate through space (or other media) transporting energy from the source to other points in the environment. It includes **light,** x-rays and gamma rays.
**Axis of an image sensor:** It is the imaginary line orthogonal to the plane (or line) of the image sensor at its center point.
**Hose axis:** Imaginary line that runs along the longitudinal axis of the cylinder that it represents.
**f.p.s.:** Frames Per Second: number of images that an image sensor takes in one second.
**Global shutter:** Image acquisition mechanism that obtains the information of the entire image frame at the same time.
**Pitch movement** (Pitch, fig. 4): It is the one produced in the hose when its longitudinal axis is tilted within the vertical plane that contains it.
**Yaw movement** (Yaw, fig 4): Yaw is the motion produced by the hose when its longitudinal axis moves laterally within the plane containing this axis.
**Skate:** Mechanism that contributes to adjust the system object of this invention so that its center coincides with the longitudinal axis of the hose.
**Pod:** Capsule or casing in which the hose to be extended and collected is housed to be able to perform the refueling operation in flight.
   The Pod is usually located under the wings of tanker aircraft that usually have one under each wing to allow two simultaneous refueling.
**Processor:** Electronic device capable of performing logical-mathematical operations at high speed.
**Light quality of an image:** The values of light intensity that reach through the lens to each of the pixels, or individual sensors of which an image sensor is composed, are multiplied by a fixed value for all that is called gain. That product must be within a set rendering range called bit depth. If that value is very high or very low the result is white or black pixels respectively that do not provide image information. For an inspection to be good, all pixels must receive an amount of light within the range of light given by that bit depth.
**Taper:** Optical element consisting of a pack of optical fibers joined together that adapt the input of the image sensor to the field of view of the area that is intended to be acquired with it.

### BACKGROUND OF THE INVENTION

There are within the state-of-the-art inventions and systems that allow the inspection of elongated objects such as cables, ropes, pipes and even hoses such as the following:
- US 2011268313
- US 2012294506
- WO2018101296

These systems use basic elements such as cameras and emitters of electromagnetic radiation to monitor or inspect these elongated elements. However, the special characteristics of the air refueling hoses together with the particularities of the other elements that coexist around them, as well as the dynamics of the system that includes those elements, make the conditions and the other means that are used in the aforementioned systems not applicable to this invention. Therefore, although some basic elements are common, the necessary system to carry out the functions referred to in this patent, differs more than enough from previous systems' capabilities to allow us to say that such (previous) systems do not belong to the state of the art of what is described and detailed in this invention.

Thus U.S. Patent 2011268313 describes a computer-aided method, a system, and a computer program product for the optical testing of a string. Such a method includes: providing a set of image data for at least part of the string; provide target values of a longitudinal extension of the cable representation with respect to a longitudinal extension of the cable in the image data set; determine a longitudinal extent of the cables in the image data set, including the adaptation of an estimated longitudinal extent to the image data set; determine at least one quality value using a quality standard based on the given longitudinal extension of the cables and the target values of the longitudinal extension of the cables.

Likewise, U.S. Patent 2012294506 discloses a cable inspection system in which in a first version the mobile wire cable is photographed in a stationary position at time intervals that are equal to the length ratio or a multiple of the length, and the speed of displacement of the wire cable, at least by a length or such multiple of length, and successive images are compared at least one length or such multiple of length, and image changes that indicate damage are controlled.

In a second version, the moving wire cable is expected to light up with flashes of light in a stationary position at time intervals that are equal to the length ratio, or a multiple of the length, and travel.

Additionally, it is known in the state of the art the document EP 3 715815 which discloses a system for monitoring the degradation status of refuelling hoses on air which comprises a device comprising at least one sensor adapted to produce data about the external surface of the refueling hose.

None of the above documents solves the problem inherent to an in-flight refueling hose that is subjected to continuous displacements vertically, horizontally, pitched and yawed or the problem of the different bulges of the same.

As for a more specific history of systems that solve some of the problems such as those described here and to clarify what this invention intends, it is important to note that within the state-of-the-art there is a patent application very similar to the one presented in this document. This is application PCT/ES2020/070015.

The system described in that patent is similar in many respects to the one presented here. However, there are important differences that are related to the optimization and reduction of number of components of said system, while the object of this invention becomes a more robust and durable alternative. In this new invention elements of that invention have been eliminated simplifying the system without loss of capacity and improving the results and these changes not only give novelty to the variations and improvements that it introduces, but also significantly differentiate it from that.

The system of the aforementioned patent, consists of a set of elements arranged so that, to obtain images of the hose a ring carrying image sensors and light emitters is used, that in addition to having an initial inclination that will no longer be necessary, manages to follow the hose in its movements. There are three fundamental movements that that invention introduces to achieve this tracing:
*Horizontal tracking:* When wound onto the drum, the hose has a horizontal movement due to the track that exists in the latter on the surface of the cylinder on which the hose is wound. **This movement will also not be necessary** since it will be the servicing carriage that provides it.
*Vertical* tracking: When the hose is wound onto the drum in several layers, the hose is wound in successive heights with respect to the rotational axis of the drum: the first layer on the drum and the next two overlapping the previous one. That causes the height of the hose to change after completion of each layer of windings. This movement will continue to be necessary.
*Yaw tracking:* This movement is **no longer necessary** to implement it because the variations in the position of the hose due to this are so small, due to the proximity of the system to the opening of the servicing carriage.

All the mechanisms included in that invention are focused on keeping the hose in the center of the ring in the best possible way and ensuring that the longitudinal axis of the same is always perpendicular to the surface containing said ring.

Therefore, the first simplification we are going to make is to **eliminate the need for the initial tilt angle□a.** We are also going to eliminate the horizontal **displacement** of the system that some slide bars are provided. Instead, as noted, we will use the servicing carriage itself to provide us with that tracking.

There is also another element that we are going to eliminate and that is that due to the reduction in size and therefore also in weight, now we will not need to join the interior structure of the pod with **any type of structure or lugs** as was the case in said invention. Instead, we will support the sides of the servicing carriage in a simpler and lighter way.

As not everything can be advantages and simplifications, another difference with the invention that has been referred to, is that, due to the aforementioned reduction in sizes, the hose is now closer to the image sensors and that generates a first problem as it is that the emitters of electromagnetic radiation must be able to provide a very reduced exposure time so the higher rate pixels per unit time does not produce blur effects. (Which is colloquially called "moved images"). Therefore, the electromagnetic radiation emitters to be used are special with very low on-off **switching time.**

Finally, another great difference with the previous invention is that the pitch movement is allowed based on new **turning mechanisms** placed on both sides of the ring and that when the hose is pitching with respect to it, they result in the tracking of the ring in that vertical plane making it always be placed with the surface containing the ring perpendicular to the longitudinal axis of the hose. In addition, in more elaborate implementations improvements are introduced compared to the previous ones such as the use of x-rays to know the state of the internal structural elements of the hose.

Summary of the fundamental differences between this patent and the previous one is:
- Horizontal movement is provided by the servicing carriage as the system is attached to it.
- Rollers or skates change as the distances are shorter and there is less space.
- The pitch mechanism is different and is simplified first by obviating the need for the initial angle □, and therefore eliminating the tilt structure that was used for it. The yaw movement is also eliminated by the proximity of the system to the servicing carriage and therefore all the mechanisms that made the system follow the hose in the horizontal plane are eliminated. This also includes elimination of the horizontal slide bars and cylinders.
- The need to introduce a short-range focusing mechanism based on the use of a taper of optical fibers, liquid lenses or mirrors to lengthen the focal distance.
- The use of high frequency electromagnetic radiation emitters and light diffusers, complemented with a very particular spatial distribution as a result of the distance closest to the hose. It is possible to carry out the illumination by means of a space-time equalization of the existing electromagnetic radiation emitters.
- Image sensors require more image frames per second and more memory. Consequence of the greater amount of data needed to be acquired per unit of time.

In short, this new application incorporates additional improvements that were not included in the previous one, as well as the deletion of elements that are no longer necessary while others are simplified.

### DESCRIPTION OF THE INVENTION

The objective of this invention is a system according to claim 1 that manages to obtain images of the entire hose with a sufficient quality to allow a later inspection of the same from the information provided by those images. To achieve this, this invention describes a system, which changes the position of image sensors and emitters of electromagnetic radiation, interactively with and continuously adjusting to the position of the hose, placing them in a very constant position relative to that hose, as it moves or tilts. This invention also refers to a method according to claim 10 to illuminate and obtain images using the previous structure, along the retraction (or extension) of that hose that reveal the smallest details, in such a way as to ensure, without a doubt, the absence of damage in it. Another important goal is to ensure that there are no hose parts that have not been inspected.

The system described here achieves the above objectives, allowing the hose inspector ring to be positioned in an efficient way and with a simpler, more robust and durable system than in the previous state of the art.

Before proceeding to the description of the proposed system, it is advisable to carry out a basic analysis of the operation of a pod, as well as of the previous systems proposed to perform the hose inspection.

As shown in Figure 2, the pod (1) houses inside, among other elements, the drum (4), on which the hose must be wound (2). The hose (2) is usually wound onto this drum (4) in three passes. The first directly on the drum (4) and the others over the other previously rolled up passes (2).

To guide the hose (2) in its retraction or extension, there is a device called a servicing carriage (3) that moves laterally perpendicular to the hose longitudinal axis. Its goal is to place the hose (2) in front of the drum point (4) where it should be (un-)wound.

The hose (2) at one end, has a small widening called **coupling** (10), usually metallic, with which it is connected to the side of the drum (4) and to which the fuel of the tanker plane arrives. At the other end, it ends in another coupling (10') connected to a drogue or basket (7) in which the pilot of said receiving aircraft must dock. When this happens, the AR coupling in the basket (7) is connected to the AR probe of the receiving aircraft and the fuel supply can begin.

To cushion the hits that occur in the retraction of the hose (2) that ends in the aforementioned basket (7) and to prevent the basket itself (7) from being rolled onto the drum, a buffer spring (6) finishing in a braking sleeve (5) is placed in front of it surrounding the hose. When the hose (2) is wound onto the drum (4) and the braking sleeve (5) reaches the servicing carriage (3) it is blocked at its entrance based on the greater width of the braking sleeve (5). This causes the buffer spring (6) to compress and the arrival of the basket (7) to be cushioned, definitively blocking the entrance of the braking sleeve (5), the spring (6) and the basket (7) to the drum (4).

Once the operation and composition of the interior of a pod with regard to the part of this patent has been outlined, the objectives to be achieved as set out in the first paragraph of this document and the way in which each and every one of them will be resolved will be set out. It will also indicate the novelties, improvements and simplifications that this new invention brings.

The **problems** to be solved are:
a) Allow the passage of the elements of greater cross section than the hose through the ring.
b) Adjust the ring as much as possible to the contour of the hose.
c) Trace the hose.
d) Avoid as much as possible the friction of the hose with the inner side of the ring.
e) Provide the ring with high-speed electromagnetic radiation emitters or very low emission time (<50us).
f) Increase the number of images acquired per unit of time.
g) Increase the memory associated with the image sensors.
h) Change to the type of sensors that allow to obtain images of high quality and high speed at the distances and speeds that the new composition in relation to the hose will impose.
i) Homogenize the distribution or reflection of light from the hose to the image sensors to avoid areas with excess or lack of light.
j) Obtain images of the same scale to facilitate their subsequent treatment.

And the **way to solve them** with the system resulting from this invention is as follows:
a) To allow the passage through the ring of elements of greater section we use mechanisms that allow to widen and narrow the inner diameter of the ring for the passage of the hose and those elements of greater cross section. Depending on the variation in diameter that is pursued and depending on the space available, different solutions with the same principle and all with similar functionality may be used. In the section of preferred embodiment of the invention are described two mechanisms of this nature that illustrate the operation and allow the indicated functionality. The mechanism consists of wheels attached to elements that fold and make that when an element of greater cross section passes, they move in the direction away from the center of the ring to the outside. As indicated, for better understanding, in the preferred embodiment of the patent two equivalent alternatives will be presented depending on whether a major or minor change of the cross section of the elements that must pass through the interior of the ring is desired.
b) To adjust the ring to the hose as much as possible, that is to say so that the longitudinal axis of the hose is always as close as possible to the center of the ring, we must reduce and adjust, as much as possible so that the inner diameter of the ring is as close as possible to the perimeter of the hose. Contribution to this is done in several ways: One of them is to place the system in a position where the diameters of the additional elements of the hose that must pass through the ring according to the above are minimized. The other is to place inside it a set of elements that will force the hose to be located in the center of the ring. These elements are the same as those indicated in the previous section a) but with additional functionality. These elements therefore have a dual purpose. On the one hand, they must be adjusted to the perimeter of the hose to allow the system to follow it at all times with a minimum variation. On the other hand, it must allow a widening of the inside of the ring for the passage of the elements of greater diameter referred to.
c) To follow the hose in relation to the previous points and at the same time get that the images obtained have the same scale (objectives c and j), the images must be acquired from the same distances. For that, we must create a series of mechanisms that make the ring always have the hose centered inside and the surface containing it always perpendicular to the longitudinal axis of the hose. Let's list the different movements and inclinations of the hose and how to accomplish the previous following:
   I. Inclination and pitch movement: In this invention, both the initial and the posterior pitch angle of the hose, mainly due to movements caused by aerodynamic forces in the hose itself and in the basket that is at its end, are solved with a single tilting mechanism that placed on both sides of the ring allows the surface containing the ring to be oriented perpendicular to the hose's longitudinal axis.
   II. Yaw movement: This movement, due to its little effect due to the proximity to a restrictive element such as the servicing carriage (equipped with movement limiting rollers), will not be necessary to compensate for in this invention, which in that sense is reduced and simplified.
   III. Vertical displacement movement: It will be obtained by means of a set of vertical slide bars along which some cylinders attached to the ring will slide to obtain a vertical tracking movement.
   IV. Horizontal displacement movement: The system resulting from this invention is to be attached to some moving element that is already equipped with a horizontal movement of hose tracking. Therefore, horizontal sliding will not need to be implemented. An item like the one referred to is the servicing carriage or similar item that tracks the required movement. In short, there will be no need for an additional mechanism to provide this following, and that is again a simplification and reduction of the system.
d) To avoid to the maximum extend the friction of the hose with the inner face of the ring, the wheels that are included in the mechanisms mentioned in paragraph a) above are used and therefore are responsible for this function that will extend the life of the hose and the wheels themselves.
e) To provide the ring with electromagnetic radiation emitters of very low emission time, that is to say so that the on-off sequence occurs at very high speed, we have to go to a laser technology or LEDs of high frequency of operation (t_{on-off}<50us).
f) Likewise, in order to obtain a greater number of images per unit of time and avoid blurred or "moved" images, we must use sensors with a global shutter and a high number of f.p.s. (above 20 f.p.s.).
g) We must also increase the amount of memory and its speed in the system.
h) To obtain quality images and good definition we must increase the resolution of the image sensors and reduce their field of view with appropriate lenses.
i) To homogenize the light that is reflected from the hose to the image sensors we will use a solution based on a technique that we have called **time space equalization** of the emitters of electromagnetic radiation aided by the use of light diffusers between the light emitters and the hose. To achieve a homogeneous distribution of light with the indicated technique we will, on the one hand, divide our emitters of electromagnetic radiation into many subpoints of light (or electromagnetic radiation) that we will place at different distances from the hose and with the ability to turn on each of them independently. By placing the points of light properly we can place them more or less at a constant distance to the hose. On the other hand, we will control the emission time of each of these emission points to prevent them from generating an area of too much or too little light. All of the above, within the exposure time of the corresponding image sensor. In summary, the placement of the emission points in which the emitters of electromagnetic radiation are divided over different points in space, allows us to change the shape and amount of light that is reflected from the hose to the image sensor (spatial equalization) and modifying the emission time of each of them we can also change the amount of light that the hose will reflect towards the sensor (temporal equalization). Using this procedure, we will have a great control of the light to be received by the image sensors and we will be able to achieve more easily the intended homogeneity.
j) To achieve that the images of the different sensors are of the same scale we must place the sensors at a distance as constant as possible from the hose and follow it as detailed in paragraph c) above. Here it is important to highlight the importance of that tracing and the influence it has in obtaining the objectives not only of the purposes in paragraph (c), but also those of the previous paragraph (i) and of this j), because of the fundamental influence it produces in the achievement of a constant homogeneity of the illumination.

The system with all the mechanisms and elements that are indicated and that solve the hose following and other problems listed, must also be anchored or attached to somewhere, either inside the pod or to some other element with the ability or the property to follow the hose horizontally, so the system also has some fixings for this purpose. It should be noted that if the system is fixed to a moving element such as the servicing carriage (3) on the side of the drum is (4), in a first position such as (8), the size of the ring will be the minimum possible and will be given by the diameter of the coupling (10) of the end of the hose (2). On the other hand, if we look at the servicing carriage in a second position (9), then the ring must let the braking sleeve (5) and the buffer spring (6) pass and its adjustment elements of the enlargement and narrowing of its interior must allow a greater margin of change, which will also make the ring larger, precisely because it is placed in a position like that second position (9).

If there is no servicing carriage or similar, as would happen if we have the hose on the ground outside the pod, a drum and a servicing carriage similar to the existing one in the pod can be added to the system in order to affix the system object of the present invention to said last element and thus be able to perform the inspection operation on the ground. Therefore, the present invention would not be limited to its use in flight, but endowed with the appropriate additional elements would allow an inspection similar to that explained, but for its realization on land or even on a ship.

As a result of the changes introduced, the system consists of the following components:
- A mechanism that encompasses:
   ∘ Some fixings to an element of the interior of said pod that is equipped with horizontal movement of following of the hose such as the servicing carriage or even to the drum or element of the same characteristics.
   ∘ Vertical sliding elements fixed to the previous fixings that allow some elements of low friction to slide along the previous elements, allowing a vertical movement of the system thanks to the movement of the hose itself, with little effort of that hose and that in also sustain a tilt mechanism in the vertical plane that allows the ring to tilt following the hose longitudinal axis.
   ∘ A ring, toroidal volume or similar structure which holds and protects the next set of elements, placing them in certain relative positions between them. These elements are:
      ▪ A few image sensors with its associated electronics and optics.
      ▪ A few arrays of electromagnetic radiation emitters with the appropriate shape and appropriately placed to with their respective diffusers to generate a homogeneous electromagnetic radiation reflection of the hose.
      ▪ Elements to avoid as far as possible the friction of the previous ring with the surface of the hose with opening capacity to make place for additional elements of greater section than the hose and that must pass through it.
- A control system that synchronizes the power on of each element of the arrays of electromagnetic radiation emitters with the acquisition of the image of the sensors, consisting of at least one processor and a memory for the storage of the images.
- A wiring to supply power to the assembly and to put it into operation, stop it and also for the download of the recorded images.

These elements or some of them could all be located in the same place, especially the control part, in another place with a connection with the first.

As can be seen, the resulting new system is considerably simplified by the reduction in the number of elements that constitute it.

No horizontal sliding elements are needed because the very element to which the system is fixed is responsible for that function in addition to the inclination of the ring so that an angle □ for the tilt structure is not needed either. It could even turn out that, depending on the quality demanded of the images that the system is going to generate, not even the elements that provide the pitch movement to improve the tracking of the hose are required.

And by the fact that the ring can now be more closely tuned to the hose (position (8)), the accuracy and quality of the images, will have improved substantially. Less variability is required in the focussing distances to get very sharp images. This system is simpler and generates better results.

Unless otherwise indicated, all the technical and scientific elements used herein have the meaning usually understood by a normal expert in the technique to which this invention belongs. In the practice of the present invention, processes and materials similar or equivalent to those described in this document may be used.

Throughout the description and claims, the expressions "comprises" or "is composed of" and their variants are not intended to exclude other technical characteristics, additives, components or steps. For experts in the field, other objects, advantages and characteristics of the invention will be derived in part from the description and in part from the practice of the invention.

### DESCRIPTION OF THE INSPECTION PROCEDURE

The inspection procedure for the described system, comprises the following steps:
1. Once the decision to carry out the inspection has been taken, the hose is moved and when in the state of retraction or storage from which the inspection is intended to begin, the system is started.
2. After the system starts, it begins with a review of the state of the electronics to ensure that everything is working correctly before proceeding to the data collection.
3. If the result of the above tests is satisfactory (this is, the hose is in position and electronics working well), the next step is the start of the hose to move along the system object of this invention.
4. Likewise, and simultaneously to the unwinding of the hose, we proceed to command all the image sensors together with their corresponding emitters of electromagnetic radiation so that they perform the following procedure:
   a. To each image sensor corresponds a set of one or more emitters of electromagnetic radiation that are responsible for illuminating the area that it is going to acquired. For each image sensor in the system, the corresponding electromagnetic radiation emitters will be turned on first. **If** the referred emitters of electromagnetic radiation are formed by arrays of multiple luminous elements we can equalize or vary the on time of each element to avoid areas too bright or too dark.
   b. After the turning on of the electromagnetic radiation emitters associated with each image sensor, that sensor will be activated so that it begins to take an image of the area of interest (the acquired information will be compressed and stored in memory).
   c. The various elements of the matrix of electromagnetic radiation emitters associated with the sensor will be switched off depending on how long we want to allow them on and we will return to point a) to repeat the procedure with the next sensor until all the sensors in the system are finished.
5. Once the acquisition of a hose section is made, a fixed time lapse will be expected depending on the speed of the hose.
6. Once the time lapse has expired, it shall be checked that the hose is ready for the acquisition of the next section and we will go back to point 4.
7. When all hose's sections have passed through the system, the procedure finishes its operation.
8. At all times, thanks to the mechanisms and elements introduced, the system will follow the hose (providing quality images thanks to this close monitoring).

The system may store several recordings of the hose which may be downloaded from it for subsequent composition and display in a different location or for the post-processing and analysis immediately after such acquisition.

The later processing of images will consist of the composition in an image similar to the real one. This image can be in 2D or 3D depending on the degree of similarity that is intended between reality and the result of the information obtained. In the case of 3D, a three-dimensional image of the hose will be represented in a visualization subsystem that has 3D capability and a set of commands will allow the movement of the hose before the eyes of the operator to proceed with a remote manual inspection.

The inspection can be progressively automated until a complete automation is achieved based on recognition techniques with traditional algorithms or AI (Artificial Intelligence).

An important aspect to consider here is that the system must recognize the beginning and end of the hose data in order to ensure the integrity and completeness of that data ensuring that the entire length of interest of the hose has been acquired by the sensors.

Finally, it should be mentioned here again that when we talk about the power on of electromagnetic radiation emitters, we are referring to the turning on of each of the components of its matrix and maintained on during different times, in order to obtain a homogeneous illumination as explained in previous paragraphs of this document.

### EXPLAINING THE FIGURES

To complement this document's description and in order to help to a better understanding of the characteristics of the invention, according to preferred examples of practical embodiments and accompanied as an integral part of said description, in a set of drawings where with illustrative and not limiting character, the following has been represented.

In Figure 1, we can see a schematic representation of the hose (2) with its components.

In Figure 2, we can see the hose being retracted inside the pod (1).

In Figure 3, we can see the drum (4) on which the hose is wound up (2).

Figure 4 shows the different movements of the hose that must be followed by the object of this invention.

Figure 5 shows one of the two preferred embodiments presented here of the system that is the object of this patent.

Figure 6 shows the other preferred embodiment of the system that is the object of this patent.

Figure 7 shows a preferred placement of an image sensor (15).

Figure 8 shows a small skate implementation (14), used in one of the preferred embodiments of the invention.

Figure 9 shows an embodiment of a large skate (14), used in a preferred embodiment of the invention.

Figure 10 shows a preferred embodiment of the electronic structure of the system of the invention.

Figure 11 shows the placement of the various image sensors (15) within the system in a preferred embodiment.

Figure 12 depicts a preferred embodiment of the relative location between the image sensor (15), light (27), mirror (19), and a diffuser (28).

Figure 13 shows how an array of light points within an electromagnetic radiation emitter (27) is spatially placed to illuminate the hose (2).

### NAMING OF THE ELEMENTS OF THE FIGURES

1.- Pod.
2.- Hose.
3.- Servicing Carriage.
4.- Hose collection drum.
5.- (Braking) sleeve
6.- (Hose buffer) spring.
7.- Basket.
8.- One preferred position for the system.
9.- Another preferred position for the system.
10.- Hose couplings.
11.- Elements of the skate to relieve friction, wheels.
12.- Axis of the anti-friction element of the skate.
13.- Return mechanism to keep the skate in its place of origin. Depending on the embodiment it could be a crossbow damper or buffering sheet, torsion springs or similar.
14.- Skate or adjustment element to the diameter of the hose.
15.- Image sensor
16.- Vertical axis with anti-dirt cover.
17.- Total or partial surrounding structure of the hose (ring in the general sense).
18.- Horizontal axis provided with a tilting (pitch) mechanism in the vertical plane.
19.- Mirror.
20.- Lens of an image sensor.
21.- Fastening structure of the surrounding structure of the hose.
22.- Control Unit.
23.- Memory.
24.- Processor.
25.- Image data compressor.
26.- Output data bus.
27.- Emitter of electromagnetic radiation.
28.- Diffuser.
29.- Axis of the image sensor.
30.- Axis of the skate.
31.- Vertical axis shock absorber.
V.- vertical movement of the hose.
H.- horizontal movement of the hose.
Q.- Pitch movement of the hose.
Y.- Yaw movement of the hose.
L.- Longitudinal movement of the hose as it passes through the system.
α..- Initial angle of the hose with respect to the shaft of the pod.

### PREFERRED EMBODIMENT OF THE INVENTION.

In view of the figures, two preferred modes of embodiment of the proposed invention are described below. Without limiting intention, these aim to highlight different realizations of specific and functional embodiments of the invention with the main purpose of illustrating in more detail, the properties that characterize it while seeking to point out the differences that distinguish it from any previous invention.

The system object of this invention is formed by a set of essential elements to which can be added other optional ones that respectively implement the fundamental functionalities that are claimed along this document with a set of improvements that facilitate the previous ones and add some new ones.

The fundamental high-level functionalities that the system aims for, can be common to those of others:
- Be able to perform an inspection of the hose by acquiring a set of images of the hose that reflect the details of the hose.
- Ensure the quality and integrity of the images obtained, in that they faithfully reflect, with a high degree of quality and sufficient detail, the condition of the hose, without missing any part, so as to improve the ability to detect any damage on it even with respect to a human operator.
- A robust system, reliable enough to allow its operation for the life expected from it.

To obtain these functionalities or capabilities, the system must comply with a set of medium-level requirements that partly translate into the need to be composed of the elements detailed below and in part by their relative positions, their location and their way of use. All constitute a system capable of generating the basic functionalities and additional improvements in accordance with the above. In addition, with clear differences with other inventions. These differences represent essential advantages and a fundamental variation in terms of the elements that make up the invention.

The **essential** parts that constitute the system are:
- A *structure surrounding* (totally or partially) the hose, ring-shaped or similar with image sensors *and* electromagnetic radiation *emitters.* This structure is equipped with mechanisms with the ability to change the *diameter* of its internal opening to let pass not only the hose but also the elements that, attached to it, must pass through the interior of it. On this structure is where a set of image sensors and a set of electromagnetic emitters are placed.
- Some *elements of vertical movement that* by sliding allow the surrounding structure to move in that direction by the action of the hose.
- A *mechanism for holding* the structure surrounding the system to fix it to the structure that will support it, such as the servicing carriage or similar elements that may be o may be not located inside the pod or with a similar capability.
- A *wiring connection of* the system to the outside for the triggering and synchronization of the acquisition of images of the sensors and the turning on of the electromagnetic radiation emitters, as well as for its supply of energy, downloading of information and to allow the supervision and remote control of the system.
- A *control system* that synchronizes the firing of electromagnetic radiation emitters with the capture of images by image sensors. This system also performs storage functions in a memory available to it and other functions such as data compression.

In addition to these essential components, there are others whose importance is not so critical but which nevertheless brings up a significant improvement. Thus, we have:
- A *tilt mechanism* in the vertical plane containing the hose axis to provide a pitch movement.
- Some *elements to avoid* as much as friction possible the friction of *the* previous ring with the surface of the hose.

There are also secondary elements that introduce appreciable improvements in the invention, as well as characteristics of the above that provide appreciable advantages in the system and which will be referred to below.

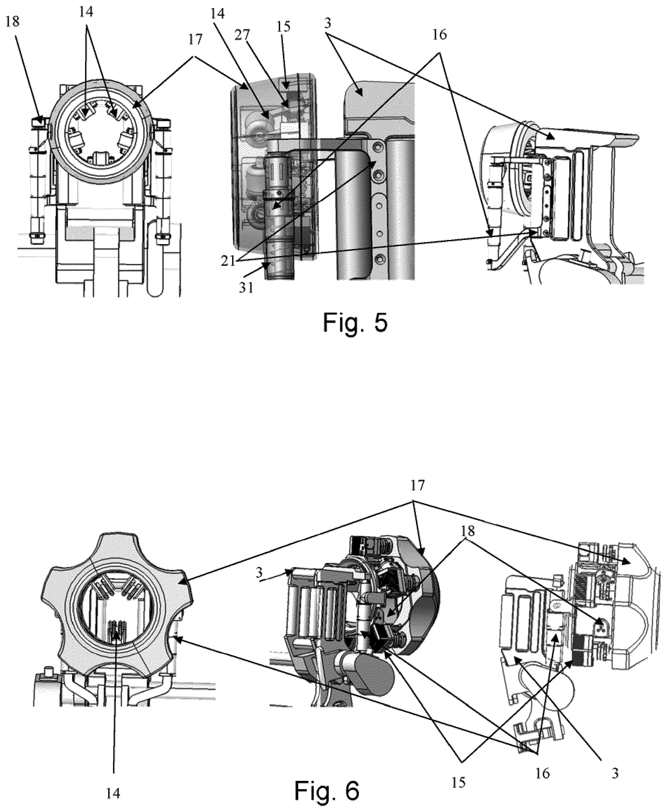

In Figures 5 and 6, we can see two design examples or embodiments of this invention, that can serve to understand more in depth the mechanisms that integrate it and the way of operating them. In both implementations the main elements are located on the same system, although in other embodiments some of them might be spread across different locations.

If we observe Figure 2, depending on whether the system object of the invention is placed in a first position (8) or in a second position (9), the aperture inside it to be left for the passage of the elements that have an external diameter greater than that of the hose will be greater or smaller. That is because the servicing carriage (3) blocks the passage of the braking sleeve (5) and the buffer spring (6) and, therefore, in that first position (8) those two elements no longer pass through the ring and only the coupling (10) will do.

For this very reason, two embodiments of the invention are shown here that differ essentially in the width of the elements that one or the other is able to let pass through its interior.

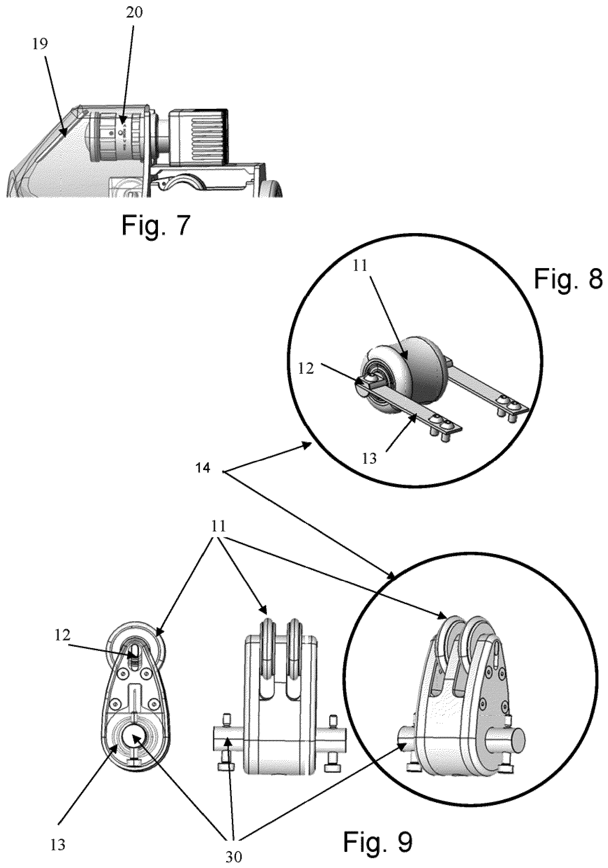

Starting with Figure 5, we can determine the elements that compose it and the functionality they contribute to within the invention in order to meet all the requirements stated. As shown in that Figure 5, the main part of the system consists of a surrounding **structure** (17) in the form of a ring that surrounds the hose and that will carry image **sensors** (15), a set of electromagnetic radiation **emitters** (27) and some **elements to adjust** to the diameter of the hose without eliminating the ability of said structure to let elements of higher cross section pass through and that in this way of realization there are a kind of skates (14). These **skates** (14) and return mechanisms (13) that confer the previous adjustment property, can be seen in isolation in Figure 8 and are composed of elements **to avoid friction** with the hose in the form of wheels (11) that rotate on **axes** (12) to avoid as much as possible friction with the surface of the hose (2). The flexibility of the return mechanisms (13) allows them to bend in part when a cross section larger than that of the hose (such as the coupling (10)) has to pass through the interior of the surrounding structure (17). Also, in this case, those adjusting mechanisms (13) relieve any hit on the wheels (11) and forces the system to be centered on the hose (2). Therefore, it has a multiple utility (bigger opening for passage of bulging elements + wheel buffering + centering of the system on the hose longitudinal axis) in this implementation of the invention.

Supporting this surrounding structure (17), there are horizontal **shafts** (18) on which the surrounding structure (17) above can rotate to give it a **pitch** movement (P) thanks to bearings. These bearings are in turn supported by axles or **vertical bars** (16) guiding **cylinders** provided with other bearings that can move along the bars. Around these **vertical bars** there are also spring **dampers** (31), in this case covered by other cylinders of increasing diameter by sections (to allow a retraction and an extension) that protect the springs from dirt of the environment. The above elements give the system a pitch **movement** (P) as indicated and a **cushioned vertical movement** (V) that will allow at all times to follow the inclinations and movements of the hose. The hose runs inside the servicing carriage (3) that this embodiment uses to follow the hose horizontally and to which we will fix the entire system that constitutes this invention. Therefore, in this embodiment, all the above will be attached to said servicing carriage (3) in the first position (8) so that when the hose is wound onto the drum (4), the **horizontal movement** (H) is provided to the system by the servicing carriage itself (3) in virtue of being attached to that servicing carriage (3) by means of the fastening **structure** (21). As mentioned, the only element that in this arrangement will have to pass through the interior of the system besides the hose will be the coupling (10) at its end and whose cross-section increment will be absorbed by the skates (14). Obviously, the drum (4) (when turning) is responsible for providing the hose with the longitudinal movement (L), necessary for the inspection of the entire length of the hose.

For the initial angle □ and the yaw movement (Y), as a result of the proximity between the system and the element where it is going to be held, such as the servicing carriage (3) no compensation is necessary nor the elements that supply these compensation capabilities to the system. This happens in both embodiments of the invention.

In another preferred implementation such as the one in Figure 6, the **fastening structure** (21) of the system will place it in a second position (9) in Figure 2. Now, the braking sleeve (5) and the buffer spring (6) must be able to pass through the interior of the surrounding structure (17) as can be deduced from Figure 2 and for this it can be seen that the skates used are different, although with the same basic principle, as shown in Figure 9 that represents these skates in isolation. These consist of: **Axes** (12) on which the elements rotate to avoid friction with the hose that also in this embodiment are shaped like wheels (11) that will touch the surface of the hose (2) and that must ensure a minimum friction with it and a return mechanism (13), in this case consisting of torsion springs with opposite directions that allow the adjustment of the system to the hose (2) when moving in the two possible directions, while allowing the passage of the previous elements of bigger section.

The rest of the elements such as **image sensors** (15) and electromagnetic radiation **emitters** (27) will be similar. In this preferred embodiment only three image sensors have been used (15) without prejudice to being able to use more or less depending on factors such as the desired resolution in each section of the hose (2).

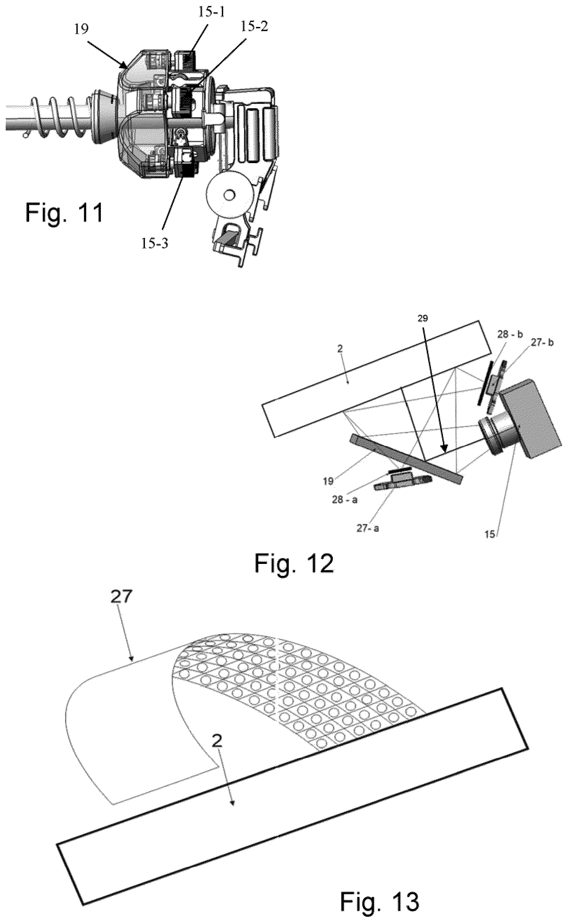

In both preferred embodiments, the **electromagnetic radiation emitters** (27) are composed by arrays of multiple emitters as can be seen in Figure 13. This is to allow each of those individual emitters to be placed in a different place in relation with the hose. That way, we can control in part, the amount of light that reaches each area of the hose. We call this spatial equalization. On the other hand, these arrays of light emitters have the ability to turn each of their components on and off independently. That means that we have another way to control the number of photons that reach the hose from each of those points. It is enough to change the time duration at which each of them is on, within the exposure interval of the image sensor. We call this temporal equalization of light emitters. In short, we have an ability to equalize the light that reaches the hose from each of the emitters by *placing* it (including the emission angle towards the hose (2)) and by the *time* that each one is emitting photons. In this way together with the help of diffusers we can homogenize the light that the hose receives in the field of view of the image sensor and avoid saturated and/or very dark areas (over- and underexposure).

It is also important to highlight in these preferred embodiments the use of high-speed electromagnetic radiation emitters, that is, electromagnetic radiation emitters with a very low emission time while being able to emit a large amount of energy such as lasers or high-speed LEDs. This is necessary due to the high relative speed of the hose (2) with respect to the image sensors. In a typical case, the hose can go at a speed of about 1200mm/sec. That implies that with a field of view along the hose of for example 40mm and an image resolution of about 2000 pixels in that direction, we will have a resolution of 50 pixels per millimeter. If 1200 mm pass in one second, that gives 1200x50 = 60,000 pixels per second. That is, a pixel moves from one adjacent position to another in 1/60,000 = about 16 microseconds. If we don't want to have any appreciable blur during the acquisition interval, we must set an exposure time that is a fraction of that time. That can be around a few microseconds. We can improve the situation in terms of exposure time, using a lower resolution image sensor, but we will lose image quality.

We can also increase the field of view with more angular lens, but again we will lose resolution. In short, even if we reach a compromise, we will still be in the order of a few tens of microseconds. This requires the use of image sensors of the type "global shutter" and emitters of electromagnetic radiation of very low emission time as proposed in the claims of this invention. Another proposed option is to employ very fast sensors with even a single image acquisition line to "scan" the hose. This would allow the use of line emitters that would illuminate only the line (or the area, in case of several lines), to be acquired by the sensor. Since the speed of acquisition of images of a sensor depends on the number of lines of this, we can take many more images per unit of time which, as said, allows us among other advantages to reduce the area to be illuminated.

Due to the variability, although small, of the position of the hose (2) and also due to the curvature of it surface and because these effects are added when you try to obtain images from very close, another problem appears that must be considered and solved. The focusing distance from the image sensor (15) to the hose (2) is small and in those circumstances the depth of field is also reduced. In short, we have a very reduced focal length and, a sufficient depth of field is still required. This involves a serious and difficult to meet compromise, to avoid blurry images. To solve that problem, in these preferred embodiments of the invention several different solutions have been followed:
- The first as can be seen in Figure 7, is to use a mirror (19) that allows us to lengthen the distance between hose (2) and image sensor (15). Special lenses such as flat lenses or fixed focal length lenses could also be used to improve the result. By increasing the focus distance, we can increase the depth of field.
- Another option is to use fiber optic decks or tapers to focus the sensor on the hose. One end of the deck is attached to the image sensor and the other is used for image capture. Finally, there is another option consisting of the use of liquid lenses that can be focused dynamically thanks to the use of an optical-type distance sensor that would be placed next to the image sensor.

Regarding the electromagnetic radiation emitters (27) used in these preferred implementations, additional polarization may be included to facilitate the disclosure of certain hose irregularities when we are interested in this type of inspection. That polarization can be global for the entire sensor or different for adjacent pixels.

What is essential is the lighting being homogeneous to avoid areas more illuminated than others and the subsequent effects of image too white or areas too black or dark. For this purpose, holographic diffusers (28) are used in these preferred embodiments that diffuse the light from discrete points, homogenizing it appropriately as indicated. This effect can also be obtained by similar procedures, using more conventional diffusers although with a higher loss of light.

In addition, the system may have energy storage elements or **capacitors** to temporarily store the energy that will later be extracted when demand arises, to turn on the emitters of electromagnetic radiation (27) and operate the system, thus not having to charge the power supply of the system with a peak consumption at the time of operation of the electromagnetic radiation emitters when high intensity is demanded at short emission times.

A possible way of embodying the set of electromagnetic radiation emitters (27) is high emitting intensity and switching **frequency** (>20,000Hz) between on and off or a very low turning on time (<50us). In addition, the set of **electromagnetic radiation emitters (27)** could not be located in the surrounding structure (27) but in another location from which the light can be carried out to that surrounding structure (27) by means of optical **fibers.** These electromagnetic radiation emitters (27) can be high speed LED technology or **laser** technology based and also some of them can generate **patterns** such as lines on the hose whose images are acquired by image sensors adapted to sense at those wavelengths.

In addition, as previously anticipated, part or all of the set of electromagnetic radiation emitters (27) can emit in the spectrum wavelength corresponding to **x-rays** (from 10 meters to 10 nanometers) and where the image sensors are adapted with their corresponding scintillators to convert the received electromagnetic radiation into visible light with the corresponding filters to be able to generate images with such radiation. In another form of complementary or alternative embodiment, the image sensors (15) have **electronics** with the ability to **compress** the information represented by the images obtained and alternatively or in a complementary way the image sensors (15) can comprise **electronics** capable of **storing** the images obtained with the ability in addition to make image **adjustments** such as geometry correction, color and brightness correction. The latter electronics can be of the FPGA type that allows the programming of this type of processing in real time at high speed.

Optionally, in case that we want to mount the system outside the structure of a pod, the system is associated with a horizontal assist mechanism to the winding of the hose (similar to the servicing carriage) on a drum in order to be able to operate without the need for that pod, by passing the hose from a reel to the system, from the pod to the system or vice versa and similar combinations.

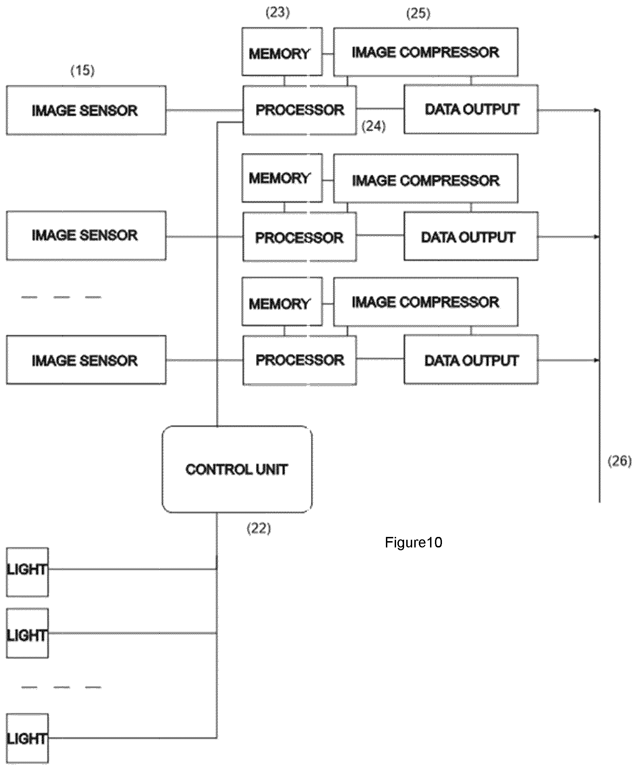

In addition to the elements specified above, the system comprises another set of subsystems with an electronic nature that are responsible for the control of the operation and the details related to it. These include a triggering subsystem for the on and off of each of the elements of the electromagnetic radiation emitters (27) and of the image sensors (15) that commanded by processing (24) and control (22) subsystems allow these elements to be synchronized with each other for the acquisition of the hose's images. As shown in Figure 10, in a preferred embodiment of this invention, each image sensor (15) has an independent processor (24) responsible for various tasks such as acquisition, composition and sending data to a compression subsystem (25) of images. This compression will allow significant memory (23) saving and so more efficient and faster handling and sending of data. All of them will be supervised by the processor (24) of the control unit (22) as shown in the same Figure 10. Once acquired and compressed, the images are stored in the memories (23) of each image sensor (15) and can be downloaded via a common data bus (26) governed by the same control unit processor (22). The images will be downloaded to a station, used for the visualization and analysis of the hose (2).

Another important element to consider within these preferred embodiments is the location and distribution of light emitters or electromagnetic radiation emitters in general, used for the acquisition of images by the sensor. Depending on the type of sensor to be used, the emitter must be in front of the sensor (in the case of x-rays) or in an appropriate place that provides the best possible homogeneous illumination. Figure 12 proposes two possible locations (a and b) without any limitation other than available space depending on the location of the emitters (27) within the system. In one of them a semi-transparent mirror (19) is used where the light is placed behind it. In another, a tilted or inclined lighting direction is applied with respect to the axis of the image sensor (15), which facilitates a homogeneous distribution of the reflection of light on the sensitive part of said image sensor (15). In the case of x-rays, as said, the situation would be simpler: the emitters and sensors are placed on opposite sides of the hose.

Likewise, the generation of electromagnetic radiation or light that will then be emitted by the set of emitters or set of **electromagnetic radiation emitters (27)** placed on the ring, does not have to occur in the same ring, but the light energy can be injected by the ends of a set of **optical fibers** and carried to the ring from the location where said light generation occurs. The other ends of the fibers will be the light emitters or the electromagnetic radiation emitters (27) located in the ring.

Thanks to the clamping of the system to an element such as the servicing carriage (3) or another similar element, either inside the pod or in a ground system, it is possible to reduce the complexity necessary in the system when tracking the position of the hose as it moves horizontally, when passing through the inside of the ring. Thanks to that, the electromagnetic radiation emitters placed in it always illuminate the hose in the same way, so the images obtained with that lighting will be very uniform in terms of their light and image characteristics. This great advantage over any previous patent within the sector allows us with little effort, to obtain similar qualities in the images, without saturated areas or lack of light, which will be used to compose the overall image of the hose and therefore obtain a better quality when obtaining that global image of the object of inspection that is one of the fundamental objectives that are pursued.

Another indisputable advantage due to the location refers to the reliability of the system that will now not receive so many sudden hits of the hose to be inspected since this variation is controlled and even reduced according to the type of implementation.

It should be emphasized here that the invention described here does not carry horizontal sliding bars since it uses its attachment to the servicing carriage as an aid in obtaining such functionality. In the same way it also does not have a mechanism that moves the hose and makes it pass along the ring. **What this invention claims, is a system that dispensing with these capabilities allows to solve the problem of inspection of the hose as long as it is placed and used in the manner specified** here. And it is partly these simplifications and partly the advantages conferred by all the other elements and novelties that constitutes this invention that provide indisputable advantages and differences compared to previous inventions.

The embodiments explained here allow to obtain the said functionalities of the system and are not intended to be a limit to the invention exposed but to explain its operation and the differences with previous patents.

### PREFERRED EMBODIMENT OF THE INSPECTION PROCEDURE

The inspection procedure presented is common to both preferred embodiments above and consists of the following steps:
1. Extend or retract the hose to the maximum to place it either completely retracted or fully extended. This is in order to ensure that the inspection to be carried out is as complete as possible. If, on the other hand, a partial inspection is intended, this condition would become "extend or collect the hose to place it in the desired starting position for the inspection".
2. Command the system electronics a health test that confirms that everything is working correctly. If the reliability of this electronics is extraordinary this step can be omitted although under normal conditions it is highly recommended.
3. Check by reading the status of the hose position sensor (2) that the hose is in the desired initial position. This position sensor is, in principle, a turn encoder that is measuring the turns of the screw on which the servicing carriage is located, but it can be any other that allows to obtain the information of the actual position of the hose (2) in a sufficiently precise way.
4. If the result of the above tests is satisfactory, the entire hose is passed through the interior of the system. To do this, the drum is started either to pick it up or to release it completely, depending on the initial state at which it was.
5. Simultaneously with this start of the drum, the following tasks are commanded to all the image sensors (15) together with their corresponding set of electromagnetic radiation emitters (27), one image sensor (15) after another or by groups suitably chosen to avoid light interference between them (the order of some of the tasks may vary):
6. Each section of the hose (2) is so inspected:
   a) Each image sensor (15) (or each group of sensors) has a correspondent set of one or more of electromagnetic radiation emitters (27) that are responsible for illuminating the area that it is going to acquire. For each image sensor (15) (or group of sensors) in the system, the corresponding electromagnetic radiation emitters or emitters (27) will be switched on first. The on time of each light emitter (or of those elements of which it may be composed) will depend on the type of equalization that is intended depending on the reception that is perceived in the different image sensors that are going to be activated.
   b) After the turning on the electromagnetic radiation emitters (27) associated with each image sensor (15) or group of sensors and once that the emission has reached the appropriate level, an image of the area of interest will be taken by activating the image sensor (15) or corresponding image sensors. The acquired information should be compressed before being stored in memory. Although, this step might be optional if neither the amount of memory nor the download speed are considered important.
   c) After the acquisition by the image sensor (15) or group of sensors, the electromagnetic radiation emitters (27) associated with them will be switched off to repeat the procedure with the following sensor or group of sensors returning to point 6a) until all the image sensors in the system have finished.
7. Once the acquisition of a section of the hose is made, a fixed time lapse will be waited, which is a function of the speed of the hose. This is done by re-measuring the position sensor of the hose to determine that the hose has passed a fixed length since the imaging of the previous section.
8. At this point, to acquire the next section of the hose we shall repeat the procedure starting at point 6(a).
9. When the entire hose passage has been completed, the system terminates its main operation.
10. **In** addition, at all times, thanks to the mechanisms and elements introduced, the system will follow the hose assuring a fixed distance to the image sensors and a following of the hose's longitudinal axis, providing thanks to this, high quality images.

The preferred system, in these implementations stores two hose recordings. One for the retraction, and another for the extension of the hose. Both can be downloaded from the system for later composition and visualization or post-processing and analysis can be done in real time if the processing capacity allows it. In that case, once the images have been recorded, they can be inspected and analyzed.

An important aspect to consider and remember here is that the system must recognize the ends of the hose in order to ensure the integrity of the data and also the completeness of the same, that is to ensure that the entire area of interest of the hose has been acquired by the sensors. This can be done based on the information obtained from the turn sensor (encoder) that controls the servicing carriage, although marks can also be placed on the hose to ensure this control. Knowing the angle of view of each image sensor and the distance to it from the hose we obtain a relationship between the length of the hose and the number of pixels obtained. That will also allow us to ensure that the entire length of the hose has been scanned as long as we ensure that there are no repeated images.

The subsequent processing of images will consist of the composition of the hose in an image similar to the real one. This image can be in 2D or 3D depending on the degree of similarity that is intended between reality and the result of the information obtained.

In the case of 3D, a three-dimensional image of the hose will be represented in a visualization subsystem that has 3D capability and a set of commands will allow a virtual movement of the hose for the operator to proceed to a remote manual inspection of it.

The inspection can be progressively automated until a complete automation is achieved based on recognition techniques with traditional algorithms or AI (Artificial Intelligence). In that case the composition will no longer be necessary.

## Claims

1. Positioning system of image sensors and electromagnetic radiation emitters for the inspection of refueling hoses with transverse, pitch and longitudinal movements, **characterized in that** it comprises:
• A **structure** (17) that surrounds the hose (2) totally or partially and houses a set of image **sensors** (15) a set of electromagnetic radiation **emitters** (27), and a set of skates (14), the latter comprising at least:
∘ An **element to reduce the friction** (11) of said skate with the surface of the hose;
∘ A **return mechanism** (13) of said skate to put it back;
• Several vertical sliding elements of the surrounding structure (17), consisting of **vertical axes** or bars (16) and **cylinders** that allow the structure to move in that vertical direction to follow hose movement;
• **Fasteners** (21) with which the system's surrounding structure (17) can be fixed;
• A **control unit** (22) of triggering and synchronization between on/off of electromagnetic radiation emitters (27) with the acquisition interval of image sensors (15);
• A **memory** (23) for storage of images acquired by image sensors (15);
• Means for **connection of the** system with the outside of it, for the supply of energy and for the sending of the images obtained with the system.

2. Positioning system of image sensors and electromagnetic radiation emitters for the inspection of refueling hoses with transverse, pitch and longitudinal movements, as described in the previous claim, wherein it also has horizontal axes (18) on which the surrounding structure can rotate (17) to confer a **pitch** movement (P) thanks to bearings that rotate based on those horizontal axes (18) and thus maintain the axis of the surrounding structure (17) with the image sensors (15) and the electromagnetic radiation emitters (27) parallel to the axis of the hose (2).

3. Positioning system of image sensors and electromagnetic radiation emitters for the inspection of refueling hoses with transverse, pitch and longitudinal movements, according to any of the preceding claims, wherein, in the skates (14), the elements to reduce the friction with the surface of the hose are **wheels (11)** that rotate on **axes** (12) perpendicular to the axis of the hose (2) and that are added to these wheels to facilitate their rotation.

4. Positioning system of image sensors and electromagnetic radiation emitters for the inspection of refueling hoses with transverse, pitch and longitudinal movements, according to the previous claims, wherein the electromagnetic radiation emitters (27) are composed of multiple light generating elements that can be placed in different parts of the system and turned on at intervals of different duration to provide a space-time equalization to the lighting of the system and thus achieve a better homogenization of the light received in the image sensors (15).

5. Positioning system of image sensors and electromagnetic radiation emitters for the inspection of refueling hoses with transverse, pitch and longitudinal movements, according to any of the preceding claims, wherein the image sensors (15) with their lenses (20) also have a **mirror** (19) with which they can lengthen the focus distance.

6. Positioning system of image sensors and electromagnetic radiation emitters for the inspection of refueling hoses with transverse, pitch and longitudinal movements, according to any of the preceding claims, wherein the clamping structure (21) of the surrounding structure (17) is used to fix it **on the servicing carriage** (3) or similar element either in a first position (8) or in a second position (9).

7. Positioning system of image sensors and electromagnetic radiation emitters for the inspection of refueling hoses with transverse, pitch and longitudinal movements, according to any of the preceding claims, wherein the set of emitters of electromagnetic radiation (27) have a high **frequency** (to be turned on and off) capacity (>20,000Hz) or a very low turning on and off time (<50us).

8. Positioning system of image sensors and electromagnetic radiation emitters for the inspection of refueling hoses with transverse, pitch and longitudinal movements, as described in the previous claims, wherein part of the set of electromagnetic radiation emitters (27) or all are **x-ray** emitters and where the image sensors are adapted with their corresponding scintillators to convert the electromagnetic radiation into light and with the corresponding filters to as a whole be able to generate images with such emitters with that type of electromagnetic radiation.

9. Positioning system of image sensors and electromagnetic radiation emitters for the inspection of refueling hoses with transverse, pitch and longitudinal movements, according to any of the preceding claims, where in the set of electromagnetic radiation emitters (27) is included a set of **diffusers** thats allow a homogeneous distribution of light on the hose.

10. Inspection procedure of refueling hoses with transverse, pitch and longitudinal movements by positioning system of image sensors and electromagnetic radiation emitters according to the positioning system of any of the preceding claims **characterized by** comprising the following steps:
a) Extension or retraction of the hose (2) to place it in the desired starting **position;**
b) Obtaining **the initial position** of the hose (2) to ensure that it is correct;
c) If the result of the above tests is satisfactory, **start the hose** by turning a drum (4) in the proper direction;
d) Simultaneously with c) command all image sensors together with their corresponding electromagnetic radiation emitters to perform the following tasks. One sensor after another:
1. **Turn on electromagnetic radiation emitters** (27) corresponding to the selected sensor;
2. Begin **image acquisition** with the sensor (15):
3. **Turn off the electromagnetic radiation emitters (27)** associated with the sensor;.
4. **Finish image acquisition** with the sensor (15);
5. **Store** the acquired data in memory (23);
6. Repeat with the **next sensor** by going to point d1) when finished with all the sensors in the system (thus obtaining an image of a section of the hose (2));
e) **Wait,** measuring the position of the hose (2) until it is in the position corresponding to the next section;
f) Return to point d) until the entire hose (2) has passed and so recorded;
g) At all times and thanks to the mechanisms introduced, the ring (17) **will follow** the hose (2) in position and inclination.

11. Inspection procedure of refueling hoses with transverse, pitch and longitudinal movements by positioning system of image sensors and electromagnetic radiation emitters according to the previous claim wherein in task d) the sensors are grouped in such a way that light interference between them is **avoided,** to perform the entire taking of a section by groups and therefore in less time.

12. Inspection procedure of refueling hoses with transverse, pitch and longitudinal movements by positioning system of image sensors and electromagnetic radiation emitters according to claims 10 and 11 wherein the electromagnetic radiation emitters that are turned on to illuminate the part of the hose to be acquired are turned **off** before the end of the interval in which the image sensor is still acquiring the image of the hose.

13. Inspection procedure of refueling hoses with transverse, pitch and longitudinal movements by positioning system of image sensors and electromagnetic radiation emitters according to the claims of the previous procedure wherein after the acquisition of images the system generates a representation of the hose in **2D or in 3D.**

14. Inspection procedure of refueling hoses with transverse, pitch and longitudinal movements by positioning system of image sensors and electromagnetic radiation emitters according to the claims of the previous procedure wherein the system also performs an automatic **inspection** of the images obtained, indicating what are the damages of the hose.

## Patentansprüche

1. Positionierungssystem von Bildsensoren und elektromagnetischen Strahlungsemittern für die Inspektion von Betankungsschläuchen mit Quer-, Neigungs- und Längsbewegungen, **dadurch gekennzeichnet, dass** es Folgendes umfasst:
• Eine **Struktur** (17), die den Schlauch (2) ganz oder teilweise umgibt und einen Satz von **Bildsensoren** (15), einen Satz von elektromagnetischen **Strahlungsemittern** (27) und einen Satz von Gleitstücken (14) aufnimmt, wobei letztere mindestens Folgendes umfassen:
∘ Ein **Element zur Verringerung der Reibung** (11) des Gleitstücks mit der Oberfläche des Schlauchs;
∘ Einen **Rückstellmechanismus** (13) des Gleitstücks, um es zurückzustellen;
• Mehrere vertikale Gleitelemente der umgebenden Struktur (17), bestehend aus **vertikalen Achsen** oder Stangen (16) und **Zylindern,** die es der Struktur ermöglichen, sich in dieser vertikalen Richtung zu bewegen, um der Bewegung des Schlauchs zu folgen;
• **Befestigungselemente** (21), mit denen die umgebende Struktur (17) des Systems fixiert werden kann;
• Eine **Steuereinheit** (22) zum Auslösen und Synchronisieren des Ein- und Ausschaltens der elektromagnetischen Strahlungsemitter (27) mit dem Erfassungsintervall der Bildsensoren (15);
• Einen **Speicher** (23) zum Speichern der von den Bildsensoren (15) erfassten Bilder;
• Mittel zur **Verbindung des** Systems mit der Außenseite desselben, zur Energieversorgung und zum Senden der mit dem System erhaltenen Bilder.

2. Positionierungssystem von Bildsensoren und elektromagnetischen Strahlungsemittern für die Inspektion von Betankungsschläuchen mit Quer-, Neigungs- und Längsbewegungen nach dem vorhergehenden Anspruch, wobei es auch horizontale Achsen (18) aufweist, um die die umgebende Struktur (17) rotieren kann, um eine **Neigungsbewegung** (P) dank Lagern zu ermöglichen, die basierend auf diesen horizontalen Achsen (18) rotieren und so die Achse der umgebenden Struktur (17) mit den Bildsensoren (15) und den elektromagnetischen Strahlungsemittern (27) parallel zur Achse des Schlauchs (2) halten.

3. Positionierungssystem von Bildsensoren und elektromagnetischen Strahlungsemittern für die Inspektion von Betankungsschläuchen mit Quer-, Neigungs- und Längsbewegungen nach einem der vorhergehenden Ansprüche, wobei in den Gleitstücken (14) die Elemente zur Verringerung der Reibung mit der Oberfläche des Schlauchs **Räder (11)** sind, die auf **Achsen** (12) senkrecht zur Achse des Schlauchs (2) rotieren und die zu diesen Rädern hinzugefügt sind, um ihre Rotation zu erleichtern.

4. Positionierungssystem von Bildsensoren und elektromagnetischen Strahlungsemittern für die Inspektion von Betankungsschläuchen mit Quer-, Neigungs- und Längsbewegungen nach einem der vorhergehenden Ansprüche, wobei die elektromagnetischen Strahlungsemitter (27) aus mehreren lichterzeugenden Elementen zusammengesetzt sind, die in verschiedenen Teilen des Systems platziert und in Intervallen unterschiedlicher Dauer eingeschaltet werden können, um einen Raum-Zeit-Ausgleich für die Beleuchtung des Systems bereitzustellen und so eine bessere Homogenisierung des von den Bildsensoren (15) empfangenen Lichts zu erreichen.

5. Positionierungssystem von Bildsensoren und elektromagnetischen Strahlungsemittern für die Inspektion von Betankungsschläuchen mit Quer-, Neigungs- und Längsbewegungen nach einem der vorhergehenden Ansprüche, wobei die Bildsensoren (15) mit ihren Linsen (20) auch einen **Spiegel** (19) aufweisen, mit dem sie den Fokusabstand verlängern können.

6. Positionierungssystem von Bildsensoren und elektromagnetischen Strahlungsemittern für die Inspektion von Betankungsschläuchen mit Quer-, Neigungs- und Längsbewegungen nach einem der vorhergehenden Ansprüche, wobei die Klemmstruktur (21) der umgebenden Struktur (17) verwendet wird, um sie **auf dem Wartungswagen** (3) oder einem ähnlichen Element entweder in einer ersten Position (8) oder in einer zweiten Position (9) zu fixieren.

7. Positionierungssystem von Bildsensoren und elektromagnetischen Strahlungsemittern für die Inspektion von Betankungsschläuchen mit Quer-, Neigungs- und Längsbewegungen nach einem der vorhergehenden Ansprüche, wobei der Satz von Emittern elektromagnetischer Strahlung (27) eine hohe (ein- und auszuschaltende) **Frequenzkapazität** (>20.000 Hz) oder eine sehr geringe Ein- und Ausschaltzeit (<50 us) aufweist.

8. Positionierungssystem von Bildsensoren und elektromagnetischen Strahlungsemittern für die Inspektion von Betankungsschläuchen mit Quer-, Neigungs- und Längsbewegungen nach einem der vorhergehenden Ansprüche, wobei ein Teil des Satzes von elektromagnetischen Strahlungsemittern (27) oder alle **Röntgenemitter** sind und wobei die Bildsensoren mit ihren entsprechenden Szintillatoren angepasst sind, um die elektromagnetische Strahlung in Licht umzuwandeln und mit den entsprechenden Filtern, um als Ganzes in der Lage zu sein, Bilder mit solchen Emittern mit diesem Typ von elektromagnetischer Strahlung zu erzeugen.

9. Positionierungssystem von Bildsensoren und elektromagnetischen Strahlungsemittern für die Inspektion von Betankungsschläuchen mit Quer-, Neigungs- und Längsbewegungen nach einem der vorhergehenden Ansprüche, wo in dem Satz von elektromagnetischen Strahlungsemittern (27) ein Satz von **Diffusoren** enthalten ist, die eine homogene Verteilung des Lichts auf dem Schlauch ermöglichen.

10. Inspektionsverfahren von Betankungsschläuchen mit Quer-, Neigungs- und Längsbewegungen durch ein Positionierungssystem von Bildsensoren und elektromagnetischen Strahlungsemittern gemäß dem Positionierungssystem nach einem der vorhergehenden Ansprüche, **dadurch gekennzeichnet, dass** es folgende Schritte umfasst:
a) Ausfahren oder Einziehen des Schlauchs (2), um ihn in der gewünschten **Ausgangsposition** zu platzieren;
b) Erhalten der **anfänglichen Position** des Schlauchs (2), um sicherzustellen, dass sie korrekt ist;
c) Falls das Ergebnis der obigen Tests zufriedenstellend ist, **Starten des Schlauchs** durch Drehen einer Trommel (4) in die richtige Richtung;
d) Gleichzeitig mit c) Befehlen allen Bildsensoren zusammen mit ihren entsprechenden elektromagnetischen Strahlungsemittern, die folgenden Aufgaben durchzuführen. Ein Sensor nach dem anderen:
1. **Einschalten der elektromagnetischen Strahlungsemitter** (27), die dem ausgewählten Sensor entsprechen;
2. Beginnen mit der **Bilderfassung** mit dem Sensor (15);
3. **Ausschalten der elektromagnetischen Strahlungsemitter (27),** die dem Sensor zugeordnet sind;
4. **Beenden der Bilderfassung** mit dem Sensor (15);
5. **Speichern** der erfassten Daten im Speicher (23);
6. Wiederholen mit dem **nächsten Sensor** durch Übergang zu Punkt d1), wenn alle Sensoren im System fertig sind (wodurch ein Bild eines Abschnitts des Schlauchs (2) erhalten wird) ;
e) **Warten,** wobei die Position des Schlauchs (2) gemessen wird, bis er sich in der Position befindet, die dem nächsten Abschnitt entspricht;
f) Rückkehren zu Punkt d), bis der gesamte **Schlauch** (2) durchgelaufen ist und so aufgezeichnet wurde;
g) Zu jeder Zeit und dank der eingeführten Mechanismen **wird** der Ring (17) dem Schlauch (2) in Position und Schräglage **folgen.**

11. Inspektionsverfahren von Betankungsschläuchen mit Quer-, Neigungs- und Längsbewegungen durch ein Positionierungssystem von Bildsensoren und elektromagnetischen Strahlungsemittern nach dem vorhergehenden Anspruch, wobei in Aufgabe d) die Sensoren derart gruppiert werden, dass Lichtinterferenz zwischen ihnen **vermieden** wird, um die gesamte Aufnahme eines Abschnitts gruppenweise und damit in kürzerer Zeit durchzuführen.

12. Inspektionsverfahren von Betankungsschläuchen mit Quer-, Neigungs- und Längsbewegungen durch ein Positionierungssystem von Bildsensoren und elektromagnetischen Strahlungsemittern nach Anspruch 10 und 11, wobei die elektromagnetischen Strahlungsemitter, die eingeschaltet sind, um den zu erfassenden Teil des Schlauchs zu beleuchten, vor dem Ende des Intervalls **ausgeschaltet** werden, in dem der Bildsensor noch das Bild des Schlauchs erfasst.

13. Inspektionsverfahren von Betankungsschläuchen mit Quer-, Neigungs- und Längsbewegungen durch ein Positionierungssystem von Bildsensoren und elektromagnetischen Strahlungsemittern nach den Ansprüchen des vorhergehenden Verfahrens, wobei das System nach der Erfassung von Bildern eine Darstellung des Schlauchs in **2D oder in 3D** erzeugt.

14. Inspektionsverfahren von Betankungsschläuchen mit Quer-, Neigungs- und Längsbewegungen durch ein Positionierungssystem von Bildsensoren und elektromagnetischen Strahlungsemittern nach den Ansprüchen des vorhergehenden Verfahrens, wobei das System auch eine automatische **Inspektion** der gewonnenen Bilder durchführt, die angibt, welche die Schäden des Schlauchs sind.

## Revendications

1. Système de positionnement de capteurs d'images et d'émetteurs de rayonnement électromagnétique pour l'inspection de tuyaux de ravitaillement ayant des mouvements transversaux, de tangage et longitudinaux, **caractérisé en ce qu'**il comprend:
• Une **structure** (17) qui entoure le tuyau (2) totalement ou partiellement et loge un ensemble de **capteurs** d'image (15), un ensemble d'**émetteurs** de rayonnement électromagnétique (27), et un ensemble de patins (14), ce dernier comprenant au moins:
∘ Un **élément de réduction de frottement** (11) dudit patin avec la surface du tuyau;
∘ Un **mécanisme de retour** (13) dudit patin pour le remettre en place.
• Plusieurs éléments coulissants verticaux de la structure environnante (17), constitués d'**axes verticaux** ou de barres (16) et de **cylindres** qui permettent à la structure de se déplacer dans cette direction verticale pour suivre le mouvement du tuyau;
• **Fixations** (21) avec lesquelles la structure environnante (17) du système peut être fixée;
• Une **unité de commande** (22) de déclenchement et de synchronisation entre l'activation et la désactivation des émetteurs de rayonnement électromagnétique (27) avec l'intervalle d'acquisition des capteurs d'image (15);
• Une **mémoire** (23) pour le stockage des images acquises par les capteurs d'images (15);
• Moyens de **connexion du** système avec l'extérieur de celui-ci, pour fournir de l'énergie et pour envoyer des images obtenues avec le système.

2. Système de positionnement de capteurs d'images et d'émetteurs de rayonnement électromagnétique pour l'inspection de tuyaux de ravitaillement ayant des mouvements transversaux, de tangage et longitudinaux, comme décrit dans la revendication précédente, dans lequel il a également des axes horizontaux (18) sur lesquels la structure environnante (17) peut tourner pour conférer un mouvement de **tangage** (P) grâce à des paliers qui tournent appuis sur ces axes horizontaux (18) et maintiennent ainsi l'axe de la structure environnante (17) avec les capteurs d'image (15) et les émetteurs de rayonnement électromagnétique (27) parallèle à l'axe du tuyau (2).

3. Système de positionnement de capteurs d'images et d'émetteurs de rayonnement électromagnétique pour l'inspection de tuyaux de ravitaillement ayant des mouvements transversaux, de tangage et longitudinaux, selon l'une quelconque des revendications précédentes, dans lequel, dans les patins (14), les éléments de réduction de frottement avec la surface du tuyau sont des **roues (11)** qui tournent sur des **axes** (12) perpendiculaires à l'axe du tuyau (2) et qui sont ajoutés à ces roues pour faciliter leur rotation.

4. Système de positionnement de capteurs d'images et d'émetteurs de rayonnement électromagnétique pour l'inspection de tuyaux de ravitaillement ayant des mouvements transversaux, de tangage et longitudinaux, selon les revendications précédentes, dans lequel les émetteurs de rayonnement électromagnétique (27) sont composés de plusieurs éléments générateurs de lumière qui peuvent être placés dans différentes parties du système et allumés à des intervalles de durée différente pour fournir une égalisation spatio-temporelle à l'éclairage du système et obtenir ainsi une meilleure homogénéisation de la lumière reçue par les capteurs d'image (15).

5. Système de positionnement de capteurs d'images et d'émetteurs de rayonnement électromagnétique pour l'inspection de tuyaux de ravitaillement ayant des mouvements transversaux, de tangage et longitudinaux, selon l'une quelconque des revendications précédentes, dans lequel les capteurs d'images (15) avec leurs lentilles (20) ont également un **miroir** (19) avec lequel ils peuvent allonger la distance de mise au point.

6. Système de positionnement de capteurs d'images et d'émetteurs de rayonnement électromagnétique pour l'inspection de tuyaux de ravitaillement ayant des mouvements transversaux, de tangage et longitudinaux, selon l'une quelconque des revendications précédentes, dans lequel la structure de serrage (21) de la structure environnante (17) est utilisée pour la fixer **sur le chariot d'entretien** (3) ou un élément similaire, soit dans une première position (8), soit dans une seconde position (9).

7. Système de positionnement de capteurs d'images et d'émetteurs de rayonnement électromagnétique pour l'inspection de tuyaux de ravitaillement ayant des mouvements transversaux, de tangage et longitudinaux, selon l'une quelconque des revendications précédentes, dans lequel l'ensemble d'émetteurs de rayonnement électromagnétique (27) a une capacité de **fréquence** élevée (pour être allumé et éteint) (>20.000 Hz) ou un temps d'allumage et d'éteignement très faible (<50 us).

8. Système de positionnement de capteurs d'images et d'émetteurs de rayonnement électromagnétique pour l'inspection de tuyaux de ravitaillement ayant des mouvements transversaux, de tangage et longitudinaux, comme décrit dans les revendications précédentes, dans lequel une partie de, ou tout, l'ensemble des émetteurs de rayonnement électromagnétique (27) sont des **émetteurs de rayons X** et où les capteurs d'image sont adaptés avec leurs scintillateurs correspondants pour convertir le rayonnement électromagnétique en lumière et avec les filtres correspondants pour pouvoir, dans l'ensemble, générer des images avec de tels émetteurs avec ce type de rayonnement électromagnétique.

9. Système de positionnement de capteurs d'images et d'émetteurs de rayonnement électromagnétique pour l'inspection de tuyaux de ravitaillement ayant des mouvements transversaux, de tangage et longitudinaux, selon l'une quelconque des revendications précédentes, où l'ensemble des émetteurs de rayonnement électromagnétique (27) comporte un ensemble de **diffuseurs** qui permettent une distribution homogène de la lumière sur le tuyau.

10. Procédé d'inspection de tuyaux de ravitaillement ayant des mouvements transversaux, de tangage et longitudinaux par le système de positionnement de capteurs d'images et d'émetteurs de rayonnement électromagnétique selon le système de positionnement de l'une quelconque des revendications précédentes, **caractérisé en ce qu'**il comprend les étapes suivantes:
a) l'extension ou rétraction du tuyau (2) pour le placer dans la **position** de départ souhaitée;
b) l'obtention de **la position initiale** du tuyau (2) pour s'assurer qu'elle est correcte;
c) si le résultat des tests ci-dessus est satisfaisant, **le démarrage du tuyau** en tournant un tambour (4) dans la bonne direction;
d) simultanément avec c), la commande de tous les capteurs d'images avec leurs émetteurs de rayonnement électromagnétique correspondants pour effectuer les tâches suivantes. Un capteur après l'autre:
1. **Allumer les émetteurs de rayonnement électromagnétique** (27) correspondant au capteur sélectionné;
2. Commencer **l'acquisition d'images** avec le capteur (15).
3. **Éteindre les émetteurs de rayonnement électromagnétique (27)** associés au capteur;
4. **Finir l'acquisition d'image** avec le capteur (15) ;
5. **Stocker** les données acquises dans une mémoire (23);
6. Répéter avec le **capteur suivant** en allant au point d1) une fois fini avec tous les capteurs du système (obtenant ainsi une image d'une section du tuyau (2));
e) **Attendre,** mesurant la position du tuyau (2) jusqu'à ce qu'il soit dans la position correspondant à la section suivante;
f) Retourner au point d) jusqu'à ce que le **tuyau** (2) entier ait passé et ainsi enregistré;
g) À tout moment et grâce aux mécanismes introduits, la bague (17) **suivra** le tuyau (2) dans sa position et son inclinaison.

11. Procédé d'inspection de tuyaux de ravitaillement ayant des mouvements transversaux, de tangage et longitudinaux par le système de positionnement de capteurs d'images et d'émetteurs de rayonnement électromagnétique selon la revendication précédente, dans lequel, dans la tâche d), les capteurs sont groupés de manière à **éviter** les interférences lumineuses entre eux, pour effectuer la prise entière d'une section par groupes et donc en moins de temps.

12. Procédé d'inspection de tuyaux de ravitaillement ayant des mouvements transversaux, de tangage et longitudinaux par le système de positionnement de capteurs d'images et d'émetteurs de rayonnement électromagnétique selon les revendications 10 et 11, dans lequel les émetteurs de rayonnement électromagnétique qui sont allumés pour éclairer la partie du tuyau à acquérir sont **éteints** avant la fin de l'intervalle pendant laquelle le capteur d'images continue à acquérir l'image du tuyau.

13. Procédé d'inspection de tuyaux de ravitaillement ayant des mouvements transversaux, de tangage et longitudinaux par le système de positionnement de capteurs d'images et d'émetteurs de rayonnement électromagnétique selon les revendications du procédé précédent, dans lequel, après l'acquisition d'images, le système génère une représentation du tuyau en **2D ou en 3D.**

14. Procédé d'inspection de tuyaux de ravitaillement ayant des mouvements transversaux, de tangage et longitudinaux par le système de positionnement de capteurs d'images et d'émetteurs de rayonnement électromagnétique selon les revendications du procédé précédent, dans lequel le système effectue également une **inspection** automatique des images obtenues, en indiquant quels sont les dommages du tuyau.
